# EUROPEAN PATENT APPLICATION

(11) **EP 2 009 316 A1**
(43) Date of publication of application: **31.12.2008**
(21) Application number: 08425374.9
(22) Date of filing: 26.05.2008
(51) Int. Cl.: F16D 65/12

(54) **Braking band for brake disc, and brake disc**

(30) Priority: 31.05.2007 IT MI20071111
(71) Applicant: Freni Brembo S.p.A., 24035 Curno (Bergamo) (IT)
(72) Inventor: Schorn, Michael, 20050 Camparada (Milano) (IT); Oberti, Leone, 24010 Lenna (Bergamo) (IT); Masoni, Paolo, 24121 Bergamo (IT)
(74) Representative: Leihkauf, Steffen Falk

(57) **Abstract**

A braking band (2) for brake disc (1) of a disc brake, particularly a brake intended for use on a commercial vehicle for road transport, comprising one or more pads adapted to cooperate with such braking band (2), comprises a main body (5) connectable to a brake disc (1) hub or cap (3) which axially extends along a main body axially extending axis (X), and which has a body first side surface (6) and a body second side surface (7) axially opposite the first one (6). The braking band (2) further comprises one or more friction surfaces (10) adapted to be engaged by the pads, and one or more covering bands (11) removably connectable to the main body (5) so as to at least partially cover at least one of the first (6) and second (7) body side surfaces thereof. Each of the covering bands (11) comprises one or more adjacent covering band portions (12) extending in the tangential direction along an open tangentially extending line of the covering band portions (Z). The covering band portions (21) comprise the friction surfaces (10), and each of them is supported by the main body (5) first (6) or second (7) body side surfaces.

## Description

The objects of the present invention are a braking band for a brake disc, and a brake disc, particularly a braking band and a brake disc intended for use on commercial vehicles.

In the field of commercial vehicles intended for road transport, such as, for example, heavy vehicles, the need is extremely felt to use brake discs that are provided with braking bands which can be disassembled without requiring to disassemble the bearing assembly from the wheel steering knuckle. Such need is dictated by the fact that the bearings currently ensure a superior life compared to the one which is ensured by the brake discs before the latter reach such a wear level as to need to be replaced, but provided that such bearings are no- longer disassembled following the -first assembling.

In known brake discs for commercial vehicles, the braking band, in the assembled condition, results to be arranged between a shoulder of a. hub or cap intended for the securing of a vehicle wheel and the same vehicle, therefore, it cannot be removed without removing the hub as well, which is supported by the bearings. in order to avoid the bearings disassembling, such brake discs are provided with a braking band comprising two mutually connectable discrete parts. Such two discrete parts are obtained by cutting the whole braking band,- having an annular configuration, according to an axial separation plane (with reference to the braking band rotational axis) and are mutually connected by means of connecting members of a various nature (for example, by means of threaded members and/or plugs).

Such configuration, making the braking band replacement possible by separation and withdrawal, in a radial direction of the braking band, of the two discrete parts composing it, does not require the bearing assembly replacement.

However, such known braking bands have the drawback of a difficult aligning, particularly in the axial direction thereof, between the two parts composing the same braking band. In the absence of an accurate aligning of these two parts, the overall braking surfaces of the braking band, formed by the connection of the braking surfaces of the two parts, do not lye in a single braking plane; instead, they define two discrete non-coplanar planes forming stepped discontinuities in passing from a surface to the other one along the jointing line of the braking band two parts. Such stepped discontinuities involve a rapid wear of the friction surfaces of the pads, which, therefore, have to be frequently replaced, as well as vibrations and noise when braking.

Therefore, an object of the present invention is to provide a braking band of a brake disc and a brake disc which allow the replacement of the braking band wearable portions due to the braking actions without requiring the bearing assembly disassembling from the wheel steering knuckle.

A further object of the present invention is to provide a braking band of a brake disc and a brake disc in which the discontinuities of the braking band braking surfaces are reduced.

These and other objects are achieved by means of a braking band for a brake disc according to claim 1, and by means of a brake disc according to claim 17.

In order to better understand the invention, and appreciate the advantage thereof, some exemplary, nonlimiting embodiments thereof will be described herein below, with reference to the annexed Figures, in which:

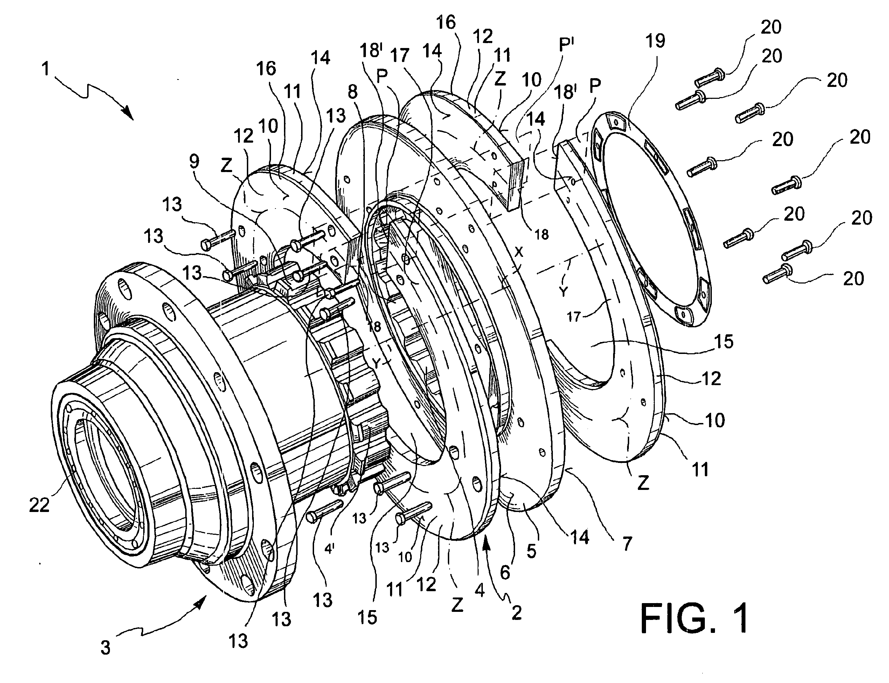

Fig. 1 is an exploded, perspective view of a brake disc for disc brake according to an embodiment of the invention;
Fig. 2 is a perspective view in assembling conditions of the brake disc in Fig. 1;
Fig. 3 is a sectional view, along the plane P' of Fig. 1, of the brake disc in Fig. 1;
Fig. 4 is a sectional view, along the planes P of Fig. 1, of a detail of the brake disc in Fig. 1;

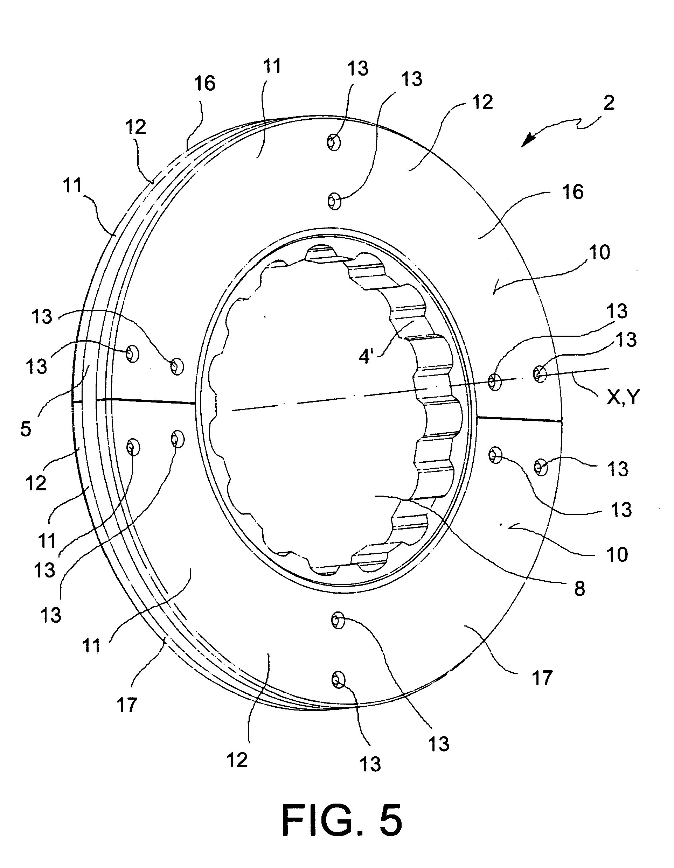

Fig. 5 is a perspective view of a braking band for brake disc according to an embodiment of the invention.

With reference to the Figures, a brake disc for a disc brake, particularly for a disc brake intended for use on a commercial vehicle for road transport, is generally indicated with the reference numeral 1.

The brake disc 1 comprises a braking band 2, and a hub or a cap 3 which is connectable to the braking band 2, as well as to one or more bearings 22 adapted to support the same hub or cap 3.

In the following of the description and in the claims below, the terms "axial", "radial" and "tangential" will be referred to the braking band in the assembled conditions.

The braking band 2 comprises' a main body 5, preferably having an essentially annular shape and, even more preferably, being manufactured in a single piece, which is connectable to the hub or cap 3. The main body 5 axially extends along an axially extending axis of the main body X, and comprises a body first side surface 6 and a body second side surface 7 axially opposite the first one.

In accordance with an embodiment, such first 6 and second 7 body side surfaces are transversal to the axially extending direction of the main body X. Preferably, the main body 5 is configured in such a manner that the body first side surface 6 and the body second side surface 7 at least partially define it in the axial direction.

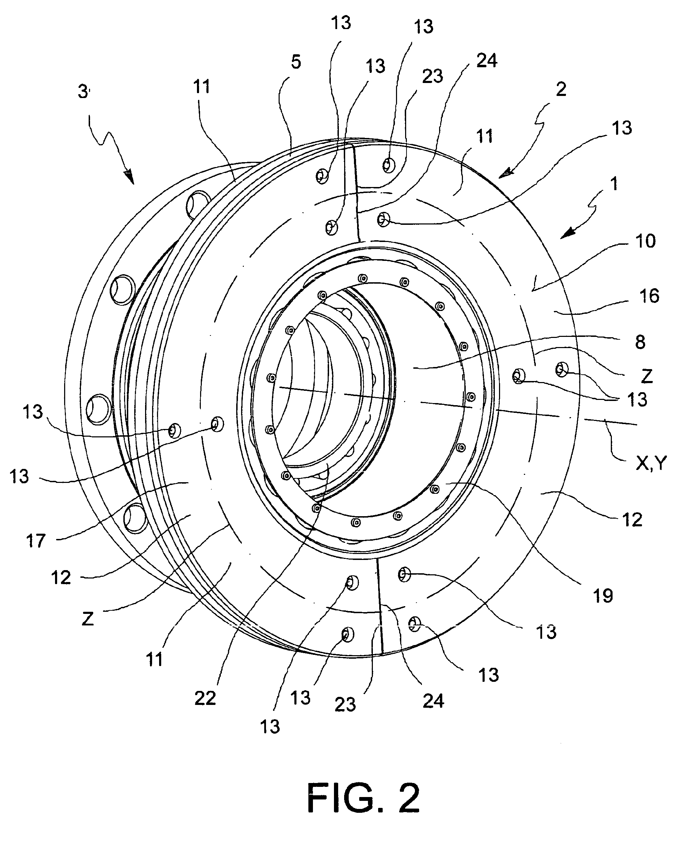

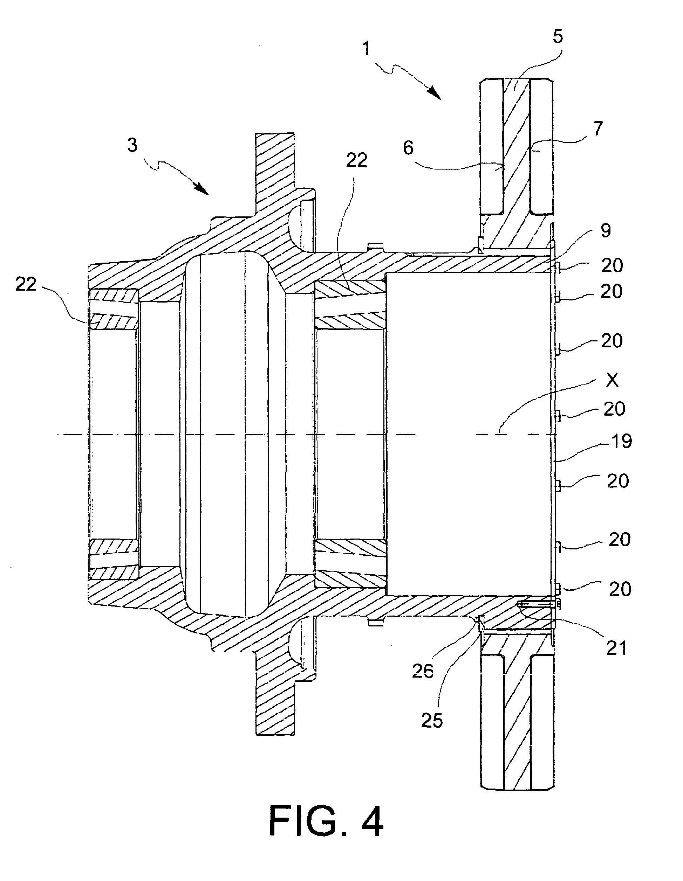

The braking band 2 can be integrally connected to the hub or cap 3 during the rotation. According to an embodiment, in order to implement the connection between hub or cap 3 and main body 5, the latter defines a through opening 8 which is adapted to receive a hub or cap 3 corresponding connecting portion 9. The connection between hub or cap 3 and main body 5 can be, for example, carried out by means of toothings 4 and 4' formed along the outlines of the through opening 8 and the hub 3 connecting portion 9, respectively. In accordance with an embodiment, the braking band 2 is at least partially axially constrained relative to the hub or cap 3 by means of a first seal ring 19 connectable to the hub or cap 3, for example, by means of screws 20 which are screwed in corresponding threaded seats 21 of the hub or cap 3 (in this regard, see, for example, Fig. 2 and Fig. 4). In addition, in accordance with a further embodiment, the braking band 2 is further axially constrained relative to the hub or cap 3 by means of a second seal ring 25 opposite the first seal ring 19 and adapted to be interposed between projecting portions 26 of the hub 3 toothings 4 and the same braking band 2.

The braking band 2 comprises one or more friction surfaces 10 intended to be engaged by one or more disc brake pads (not shown in the Figures) during the braking actions, so as to slow down the brake disc 1 rotation, which brake disc is integral, when rotating, to the vehicle wheel, therefore to exert a braking action on the same vehicle.

Advantageously, the braking band 2 comprises one or more covering bands 11 which can be removably connected, for example by means of threaded connecting members 13, to the main body 5, so as to at least partially cover at least one of the first and second body side surfaces 6 and 7 thereof. Each of such covering bands 11 comprises one or more covering band portions 12 adjacent one to the other, extending in the open tangential direction along an open tangentially extending line of the covering band portions Z. Furthermore, such covering band portions 12 comprise the friction surfaces 10, and are supported by the main body 5 first 6 or second 7 body side surfaces.

By the term "adjacent covering band portions", covering band portions are meant which are arranged one next to the other, so as to define boundary zones 24 in which the covering band portions 12 are at least partially in contact one with the other, or define an essentially null interface space 23.

By the term "open", referred to the tangential extending line of the covering band portions Z, a line is meant having a starting point and an end point, in which such starting and end points are mutually distinct and separated.

In a so-configured braking band, the components which are provided with friction surfaces 10, which therefore wear and require regular replacements, are the covering band portions 12 of the covering bands 11. Thanks to the open outline thereof, the covering band portions 12 can be disassembled by the main body 5 and withdrawn, for example along a radial direction, from the brake disc unit 1 without requiring a disconnection of the main body 5 from the hub 3, therefore without requiring a disassembling of the bearings 22 which support the hub 3. In this manner, it is possible to replace the covering bands 11 without compromising the bearings 23 reliability and life. Furthermore, the main body 5 body side surfaces 6 and 7 constitute a common reference for the support of the covering band portions 12, thus solving the problem of aligning them. Thanks to the possibility to control the adjacent covering band portions 12 aligning, it is further possible to control, therefore to reduce, the discontinuities between the respective friction surfaces 10 of the successive adjacent covering band portions 12.

Advantageously, the covering band portions 12 are so shaped as to define, once assembled to the main body 5, essentially planar braking surfaces which comprise the friction surfaces 10. In other words, the covering band portions 12 are shaped in such a manner that the surface which is actually engageable by the pads in order to implement the braking actions, formed by the respective friction surfaces 10 included by the adjacent covering band portions 12 of each covering bands 11, turns out to be, on the whole, essentially planar, that is free from steps or discontinuities, as if the covering bands 11 would be manufactured in a single piece. Such characteristic is made possible by the common support provided by the body side surfaces 6 and 7, which allow an easy aligning of the covering band portions 12. In order to further promote such aligning, the main body 5 first 6 and the second 7 body side surfaces are preferably essentially planar.

In accordance with an embodiment, the covering bands 11 are provided on both sides of the main body 5, particularly, the covering bands 11 at least partially cover both the body first side surface 6, and the body second -side surf-ace 7 of the main body 5. In such a manner, the braking band 2 turns out to be engageable by the brake pads on both the sides thereof.

In -order to protect the body side surfaces of the main body 5, particularly, in order to avoid that such body side surfaces are directly engaged by the pads, which would induce a rapid wear thereof, the covering bands 11 are advantageously so shaped as to completely cover the body side surface 6 or 7 of the main body 5 at which they are applied.

According to a possible embodiment, each of the covering band portions- 12 of one of the covering bands 11 is distinct from the other ones, and it can be connected to the main body 5, for example, through the threaded connecting members 13, independently. In other words, each of the covering band portions 12 needs not to be connected to the further covering band portions 12, therefore it can be connected to the main body 5 independently from the fact that these have already been connected, or have yet to be connected, to the main body 5. In this manner, the covering bands 11 can be connected to (or disconnected from) the main body 5 portionwise, without requiring the disassembling of any other brake disc 1 components.

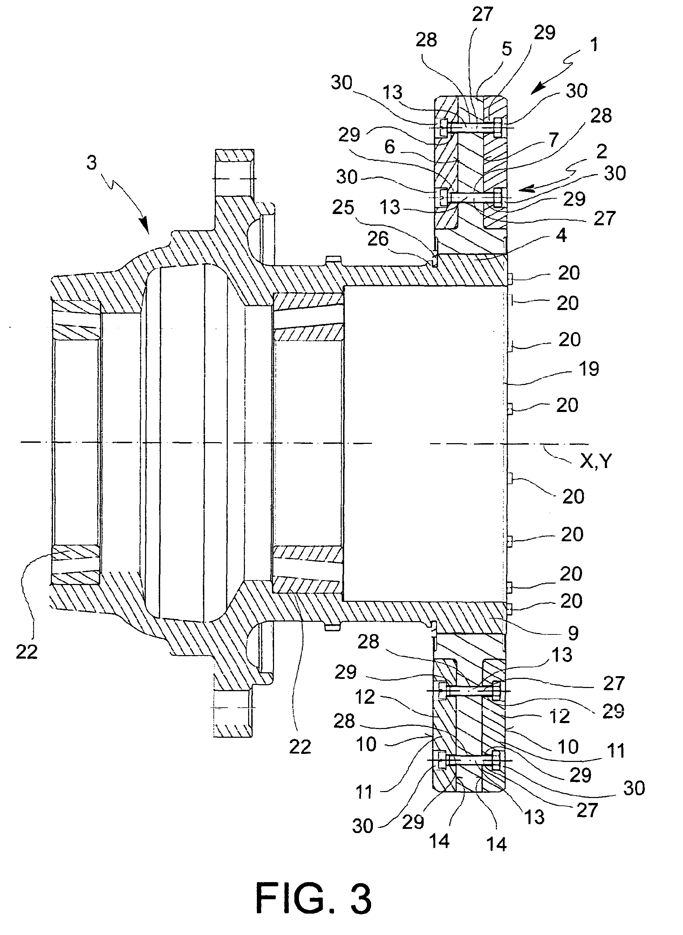

In accordance with an embodiment, the threaded connecting members 13 comprise bolts 27 adapted to be housed in corresponding main body 5 through seats 28 and covering band portions 12 through seats 29 (in this regard, see, for example. Fig. 3). The heads of the bolts 27 are advantageously housed in head seats 30 obtained in the covering band portions 12, preferably at both sides of the main body 5. In this manner, screwing the threaded connecting members 13 induces the approach of the covering band portions 12 to the main- body 5, until these abut against the latter.

Advantageously, the covering band portions 12 comprise assembling surfaces 14 which are intended to abut against one of the main body 5 body side surfaces 6 or 7 following the covering bands 11 assembling on the main body 5. With further advantage, the covering band portions 12 axially extend, preferably by essentially equal lengths, along an axially extending direction Y, and are defined along such direction Y by the preferably planar assembling surfaces 14, on one side, and by the friction surfaces 10 forming, on the whole, preferably planar braking surfaces, on the other side.

In accordance with an embodiment, the covering bands 11 have, on the whole, an annular shape, so as to be able to be applied on and, preferably, completely cover the main body 5 body first and second side surfaces 6 and 7, also having preferably annular conformations. The so-shaped covering bands 11 define a through opening 15 corresponding to the main body 5 through opening 8, and preferably co-axial thereto, so as to allow the hub or cap 3 connecting portion 9 insertion.

In the case of covering bands 11 having an annular overall shape, the covering band portions 12 forming a same covering band 11 are preferably so shaped as annular sector, the widths and total number of which may vary according to the particular constructive needs required. Such special configuration of the covering band 11 and of the covering band portions 12 makes the covering band 11 replacement possible, although this is of an annular shape, that is although it tangentially extends along an extending line which, on the whole, is closed. It shall be apparent that the replacement of an annular covering band manufactured in a single piece would not possible without the hub 3 previous removal, as well.

Advantageously, the covering band portions 12 belonging to pairs of adjacent covering band portions 12 comprise respective contact surfaces 18 and 18' which are suitable to abut one against the other. In this manner, when covering band 11 and main body 5 are connected, an essential continuity is ensured between adjacent covering band portions 12, therefore also of the overall braking surface which is formed by the respective friction surfaces 11 thereof. With further advantage, such contact surfaces 18 and 18' are mutually essentially complementary.

In accordance with an embodiment, the covering band portions 12 of pairs of adjacent covering band portions 12 are so shaped as to turn out to be in an intimate contact at the boundary zone 24 thereof along the axially extending direction Y thereof, in assembling conditions.

For example, such contact surfaces 18 and 18' can be essentially planar, and they can preferably extend along a radial direction (with reference to the braking band in assembled conditions).

In accordance with an embodiment, the covering bands 11 are just provided with one of the above-mentioned pairs of covering band portions 12. In other terms, the covering bands 12 comprise a first covering band portion 16 and a second covering band portion 17, preferably in the- shape of half-rings (that is, so shaped as annular sectors having a width of about 180°). Such first portion and second covering band portions 16 and 17 are such as to divide in two equal parts the covering band 11 to which they belong along an axial separation plane P defining, on each of these two parts, the respective planar pairs of planar surfaces 18, and 18' adapted to abut two-by-two one against the other. Such shape has the advantage to minimize the operations which are needed for the covering bands 11 assembling and disassembling, furthermore to minimize the zones in which the passage between the two adjacent covering band portions 12 occurs.

From the description set forth above, those skilled in the art will be able to appreciate how the braking band and the brake disc according to the present invention at least partially solve the drawbacks related to the braking bands and brake discs for commercial vehicles according to the prior art.

Particularly, those skilled in the art will be able to appreciate how the braking band and the brake disc according to the invention allow replacing the components which wear, that is the covering bands, following the braking actions, without requiring the hub-b-raking band assembly removal, therefore without disassembling the bearing assembly from the vehicle wheel steering knuckle.

Furthermore, those skilled in the art will be able to appreciate how, by means of the braking band and the brake disc according to the invention, it is possible to reduce the braking surfaces discontinuities thanks to the common support ensured to the covering- band portions constituting the covering bands by the main body side surfaces.

To the described embodiments of braking band and brake disc according to the invention, those skilled in the art, in order to satisfy specific, contingent needs, will be able to make a number of changes, modifications, or replacements of elements with other ones which are functionally equivalent, without anyhow departing from the scope of the following claims.

## Claims

1. A braking band (2) for brake disc (1) of a disc brake, particularly a brake intended for use on a commercial vehicle for road transport comprising one or more pads adapted to cooperate with said braking band (2), said braking band (2) comprising:
- a main body (5) connectable to a hub or cap (3) of said brake disc (1), said main body (5) axially extending along an axially extending axis of the main body (X), and having a body first side surface (6) and a body second side surface (7) axially opposite the first one (6);
- one or more friction surfaces (10) adapted to be engaged by said pads;
**characterized in that** it comprises one or more covering bands (11) removably connectable to said main body (5) so as to at least partially cover at least one of said first (6) and second (7) body side surfaces thereof, each of said covering bands (11) comprising one or more adjacent covering band portions (12) extending in the tangential direction along an open tangentially extending line of the covering band portions (Z), in which said covering band portions (12) comprise said friction surfaces (10), and in which each of said covering band portions (12) is supported by said main body (5) first (6) or said second (7) body side surfaces.

2. The braking band (2) according to the preceding claim, wherein said adjacent covering band portions (12) form, in assembling conditions, essentially planar surfaces comprising said friction surfaces (10).

3. The braking band (2) according to claim 1 or 2, wherein said main body (5) first (6) and second (7) body side surfaces are essentially planar.

4. The braking band (2) according to any one of the preceding claims, wherein said covering bands (11) are arranged on both sides of the main body (5), so as to at least partially cover said main body (5) body first side surface (6) and said main body (5) body second side surface (7).

5. The braking band (2) according to any one of the preceding claims, wherein each of said covering bands (11)-completely covers said main body (5) first (6) or said main body (5) second (7) body side surfaces.

6. The braking band (2) according to any one of the preceding claims, wherein each of said covering band portions (12) is distinct from the other covering band portions (12), and is connectable to said main body (5) independently from the connection to the latter of the remaining covering band portions (12).

7. The braking band (2) according to any one of the preceding claims, wherein said covering band portions (12) comprise assembling surfaces (14) intended to abut against said first (6) or said second (7) body side surfaces of the main body (5).

8. The braking band (2) according to the preceding claim, wherein said covering band portions (12) axially extend along an axially extending axis of the covering band portions (Y), and are axially defined by said assembling surfaces (14) and said friction surfaces (10).

9. The braking band (2) according to any one of the preceding claims, wherein said covering band portions (12) and said main body (5) are mutually connectable through threaded connecting members (13).

10. The braking band (2) according to any one of the preceding claims, wherein said covering bands (11) have an annular shape, and said covering band portions (12) have an annular sector shape.

11. The braking band (2) according to any one of the preceding claims, wherein the covering band portions (12) of pairs of adjacent successive covering band portions (12)- comprise respective contact surfaces (18, 18') adapted to abut one against the other.

12. The braking band (2) according to the preceding claim, wherein said contact surfaces (18, 18') are mutually essentially complementary.

13. The braking band (2) according to claim 11 or 12, wherein said contact surfaces (18, 18') are essentially planar.

14. The braking band (2) according to the preceding claim, wherein said contact surfaces (18, 18') extend along a radial direction of said braking band.

15. The braking band (2) according to claim 13 or 14,
wherein said covering bands (11) comprise a first (16) and a second (17) of said covering band portions (12), wherein said first (16) and second (17) covering band portions divide said covering bands (11) in two essentially equal parts along an axial separation plane (P) defining, on such two parts, respective pairs of said contact surfaces (18, 18') adapted to abut two-by-two the one against the other.

16. The braking band (2) according to any one of the preceding claims, wherein said main body (5) is manufactured in a single piece.

17. A brake disc (1) for a disc brake, particularly a disc brake intended for use on a commercial vehicle for road transport, comprising:
- a braking band (2) according to any one of the preceding claims;
- a hub or cap (3) connectable to said braking band (2);
- means (4, 4') for the connection of said braking band (2) and said hub or cap (3).
